# EUROPEAN PATENT APPLICATION

(11) **EP 2 793 169 A1**
(43) Date of publication of application: **22.10.2014**
(21) Application number: 14162625.9
(22) Date of filing: 31.03.2014
(51) Int. Cl.: G06K 9/00

(54) **Method and apparatus for managing objects of interest**

(30) Priority: 19.04.2013 US 201313866239
(71) Applicant: Nokia Corporation, 02610 Espoo (FI)
(72) Inventor: Mate, Sujeet Shyamsundar, 33720 Tampere (FI); Eronen, Antti, 33820 Tampere (FI)
(74) Representative: Nokia Corporation

(57) **Abstract**

A method, apparatus, and computer program product are disclosed to manage objects of interest. In the context of a method, source content is received, wherein the source content includes at least one of audio, video, or image content. The method includes detecting a representation of an object of interest in the source content and determining, by a processor, whether the detected representation of the object of interest is below a predetermined quality threshold. In an instance in which the representation of the object of interest is below the predetermined quality threshold, the method includes replacing the detected representation of the object of interest in the source content with a higher quality representation of the object of interest acquired from a set of stored representations of objects of interest. A similar apparatus and computer program product are also provided.

## Description

### TECHNOLOGICAL FIELD

Example embodiments of the present invention relate generally to crowd sourced media and, more particularly, to a method and apparatus for replacing the representation of an object of interest from source content with a more recognizable representation of the object of interest.

### BACKGROUND

In ad-hoc events or in events which are captured primarily by individuals within a crowd, content capturing devices are often in unknown locations. Consider the likely perspective of an image capturing device, which is often held by a user who may not be in an ideal image capturing location and who may not be particularly proficient at capturing high quality content. Some of the content captured by such image capturing devices may therefore be pointing to advertisements (e.g., billboards) in an event venue, while some may be pointed in a direction that fails to capture the advertisements properly. Moreover, some camera angles pointing to advertisements in the event venue may produce bad quality representations of the advertisement.

Services exist that create content remixes based on crowd sourced media. As a result, remixes may include low quality content that fails to optimize the marketing impact of various advertisements.

### BRIEF SUMMARY

Accordingly, a method, apparatus, and computer program product are provided that enable better management of objects of interest, such as advertisements. In an example embodiment, a method, apparatus and computer program product are provided to receive content, detect objects of interest, and update the content to include higher quality versions of any identified objects of interest.

In a first example embodiment, a method is provided that includes receiving source content, wherein the source content includes at least one of audio, video, or image content. The method includes detecting a representation of an object of interest in the source content and determining, by a processor, whether the detected representation of the object of interest is below a predetermined quality threshold. In an instance in which the representation of the object of interest is below the predetermined quality threshold, the method includes replacing the detected representation of the object of interest in the source content with a higher quality representation of the object of interest acquired from a set of stored representations of objects of interest.

In some embodiments, detecting the representation of the object of interest in the source content includes segmenting the source content to identify distinct representations of objects, and comparing each distinct representation of an object to representations of objects of interest in the set of stored representations of objects of interest. In one such embodiment, determining whether the detected representation of the object of interest is below the predetermined quality threshold includes at least one of: analyzing the similarity between the detected representation of the object of interest and a stored representation of the object of interest; analyzing clarity of the detected representation of the object of interest; or determining whether a size of the detected representation of the object of interest is larger than a predetermined size threshold.

In one embodiment, the method may include adjusting prominence in the source content of the higher quality representation of the object of interest. In this regard, the method may include determining a relevance of the object of interest, wherein adjusting the prominence in the source content of the higher quality representation of the object of interest is based on the determined relevance of the object of interest.

In another embodiment, the method may include geo-registering the source content using contextual data embedded in the source content, wherein geo-registering the content comprises associating the content with a specific location. In an instance in which the detected representation of the object of interest is not below the predetermined quality threshold, the method may include updating the set of stored representations of objects of interest to include the detected representation of the object of interest, wherein the detected representation of the object of interest replaces a stored representation in an instance in which the detected representation of the object of interest is an updated version of the stored representation.

In another example embodiment, an apparatus is provided having at least one processor and at least one memory including computer program code, the at least one memory and the computer program code configured to, with the at least one processor, cause the apparatus to receive source content, wherein the source content includes at least one of audio, video, or image content. The apparatus detects a representation of an object of interest in the source content and determines whether the detected representation of the object of interest is below a predetermined quality threshold. In an instance in which the representation of the object of interest is below the predetermined quality threshold, the apparatus replaces the detected representation of the object of interest in the source content with a higher quality representation of the object of interest acquired from a set of stored representations of objects of interest.

In some embodiments, detecting the representation of the object of interest in the source content includes segmenting the source content to identify distinct representations of objects, and comparing each distinct representation of an object to representations of objects of interest in the set of stored representations of objects of interest. In one such embodiment, determining whether the detected representation of the object of interest is below the predetermined quality threshold includes at least one of: analyzing the similarity between the detected representation of the object of interest and a stored representation of the object of interest; analyzing clarity of the detected representation of the object of interest; or determining whether a size of the detected representation of the object of interest is larger than a predetermined size threshold.

In one embodiment, the at least one memory and the computer program code are further configured to, with the at least one processor, cause the apparatus to adjust prominence in the source content of the higher quality representation of the object of interest. In this regard, the apparatus may determine a relevance of the object of interest, wherein adjusting the prominence in the source content of the higher quality representation of the object of interest is based on the determined relevance of the object of interest.

In another embodiment, the at least one memory and the computer program code are further configured to, with the at least one processor, cause the apparatus to geo-register the source content using contextual data embedded in the source content, wherein geo-registering the content comprises associating the content with a specific location. In an instance in which the detected representation of the object of interest is not below the predetermined quality threshold, the apparatus may update the set of stored representations of objects of interest to include the detected representation of the object of interest, wherein the detected representation of the object of interest replaces a stored representation in an instance in which the detected representation of the object of interest is an updated version of the stored representation.

In another example embodiment, a computer program product is provided that includes at least one non-transitory computer-readable storage medium having computer-executable program code portions stored therein with the computer-executable program code portions comprising program code instructions that, when executed, cause an apparatus to receive source content, wherein the source content includes at least one of audio, video, or image content. The apparatus detects a representation of an object of interest in the source content and determines whether the detected representation of the object of interest is below a predetermined quality threshold. In an instance in which the representation of the object of interest is below the predetermined quality threshold, the apparatus replaces the detected representation of the object of interest in the source content with a higher quality representation of the object of interest acquired from a set of stored representations of objects of interest.

In some embodiments, detecting the representation of the object of interest in the source content includes segmenting the source content to identify distinct representations of objects, and comparing each distinct representation of an object to representations of objects of interest in the set of stored representations of objects of interest. In one such embodiment, determining whether the detected representation of the object of interest is below the predetermined quality threshold includes at least one of: analyzing the similarity between the detected representation of the object of interest and a stored representation of the object of interest; analyzing clarity of the detected representation of the object of interest; or determining whether a size of the detected representation of the object of interest is larger than a predetermined size threshold.

In one embodiment, the program code instructions, when executed, further cause the apparatus to adjust prominence in the source content of the higher quality representation of the object of interest. In this regard, the apparatus may determine a relevance of the object of interest, wherein adjusting the prominence in the source content of the higher quality representation of the object of interest is based on the determined relevance of the object of interest.

In another embodiment, the program code instructions, when executed, further cause the apparatus to geo-register the source content using contextual data embedded in the source content, wherein geo-registering the content comprises associating the content with a specific location. In an instance in which the detected representation of the object of interest is not below the predetermined quality threshold, the program code instructions may further cause the apparatus to update the set of stored representations of objects of interest to include the detected representation of the object of interest, wherein the detected representation of the object of interest replaces a stored representation in an instance in which the detected representation of the object of interest is an updated version of the stored representation.

In another example embodiment, an apparatus is provided that includes means for receiving source content, wherein the source content includes at least one of audio, video, or image content. The apparatus includes means for detecting a representation of an object of interest in the source content and determining whether the detected representation of the object of interest is below a predetermined quality threshold. In an instance in which the representation of the object of interest is below the predetermined quality threshold, the apparatus includes means for replacing the detected representation of the object of interest in the source content with a higher quality representation of the object of interest acquired from a set of stored representations of objects of interest.

The above summary is provided merely for purposes of summarizing some example embodiments to provide a basic understanding of some aspects of the invention. Accordingly, it will be appreciated that the above-described embodiments are merely examples and should not be construed to narrow the scope or spirit of the invention in any way. It will be appreciated that the scope of the invention encompasses many potential embodiments in addition to those here summarized, some of which will be further described below.

### BRIEF DESCRIPTION OF THE DRAWINGS

Having thus described certain example embodiments of the present disclosure in general terms, reference will now be made to the accompanying drawings, which are not necessarily drawn to scale, and wherein:
Figure 1 shows a block diagram of an apparatus that may be specifically configured in accordance with an example embodiment of the present invention;
Figure 2 illustrates a flowchart describing example operations for managing objects of interest detected in source content, in accordance with some example embodiments;
Figure 3a illustrates an example image highlighting low quality objects of interest in source content, in accordance with some example embodiments;
Figure 3b illustrates an example image in which high quality objects of interest are inserted in the source content, in accordance with some example embodiments;
Figure 3c illustrates another example image showing a small object of interest in source content, in accordance with some example embodiments;
Figure 3d illustrates another example image in which an enlarged object of interest is inserted in the source content, in accordance with some example embodiments;
Figure 3e illustrates an example image highlighting a poorly oriented object of interest in the source content, in accordance with some example embodiments;
Figure 3f illustrates an example image in which a properly oriented object of interest is inserted in the source content, in accordance with some example embodiments;
Figure 4 illustrates a diagram showing an example apparatus for ensuring the high quality of visibility of objects of interest in remixes, in accordance with some example embodiments; and
Figure 5 illustrates a flowchart describing example operations for adjusting the prominence of a representation of an object of interest, in accordance with some example embodiments.

### DETAILED DESCRIPTION

Some embodiments of the present invention will now be described more fully hereinafter with reference to the accompanying drawings, in which some, but not all embodiments of the inventions are shown. Indeed, these inventions may be embodied in many different forms and should not be construed as limited to the embodiments set forth herein; rather, these embodiments are provided so that this disclosure will satisfy applicable legal requirements. Like numbers refer to like elements throughout. As used herein, the terms "data," "content," "information," and similar terms may be used interchangeably to refer to data capable of being transmitted, received, and/or stored in accordance with embodiments of the present invention. Thus, use of any such terms should not be taken to limit the spirit and scope of embodiments of the present invention.

Additionally, as used herein, the term "circuitry" refers to (a) hardware-only circuit implementations (e.g., implementations in analog circuitry and/or digital circuitry); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. This definition of "circuitry" applies to all uses of this term herein, including in any claims. As a further example, as used herein, the term "circuitry" also includes an implementation comprising one or more processors and/or portion(s) thereof and accompanying software and/or firmware. As another example, the term "circuitry" as used herein also includes, for example, a baseband integrated circuit or applications processor integrated circuit for a mobile phone or a similar integrated circuit in a server, a cellular network device, other network device, and/or other computing device.

As defined herein, a "computer-readable storage medium," which refers to a non-transitory physical storage medium (e.g., volatile or non-volatile memory device), can be differentiated from a "computer-readable transmission medium," which refers to an electromagnetic signal.

A method, apparatus, and computer program product are provided in accordance with an example embodiment of the present invention in order to manage representations of objects of interest from source content. As such, the method, apparatus, and computer program product may be embodied by any of a variety of devices. For example, the devices may include any of a variety of mobile terminals, such as a portable digital assistant (PDA), mobile telephone, smartphone, mobile television, gaming device, laptop computer, camera, tablet computer, video recorder, web camera, or any combination of the aforementioned devices. Additionally or alternatively, the computing device may include fixed computing devices, such as a personal computer or a computer workstation. Still further, the method, apparatus, and computer program product of an example embodiment may be embodied by a networked device, such as a server or other network entity, configured to communicate with one or more devices, such as one or more client devices.

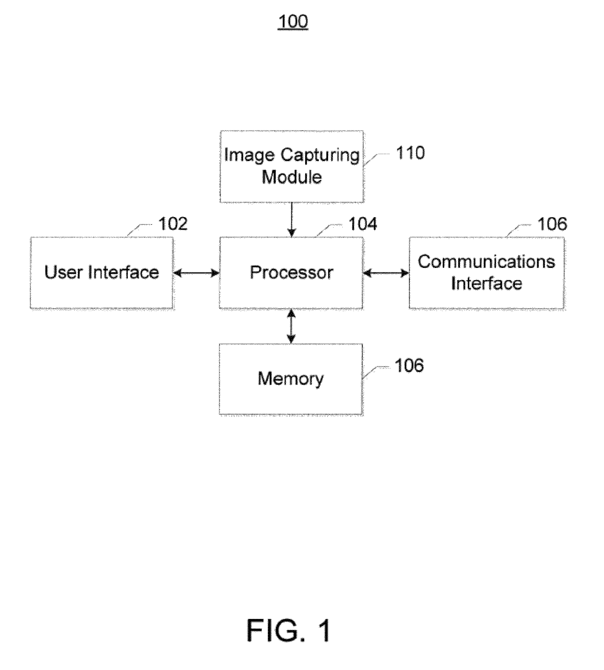

Regardless of the type of device, an apparatus 100 that may be specifically configured to capture and manage representations of objects of interest with an example embodiment of the present invention is illustrated in Figure 1. It should be noted that while Figure 1 illustrates one example configuration, numerous other configurations may also be used to implement embodiments of the present invention. As such, in some embodiments, although elements are shown as being in communication with each other, hereinafter such elements should be considered to be capable of being embodied within the same device or within separate devices.

Referring now to Figure 1, the apparatus 100 may include or otherwise be in communication with a processor 104, a memory device 108, and optionally a communication interface 106, a user interface 102, and/or an image capturing module 110. In some embodiments, the processor (and/or co-processor or any other processing circuitry assisting or otherwise associated with the processor) may be in communication with the memory device via a bus for passing information among components of the apparatus. The memory device may be non-transitory and may include, for example, one or more volatile and/or non-volatile memories. In other words, for example, the memory device may be an electronic storage device (e.g., a computer readable storage medium) comprising gates configured to store data (e.g., bits) that may be retrievable by a machine (e.g., a computing device like the processor). The memory device may be configured to store information, data, content, applications, instructions, or the like, for enabling the apparatus to carry out various functions in accordance with an example embodiment of the present invention. For example, the memory device could be configured to buffer input data for processing by the processor. Additionally or alternatively, the memory device could be configured to store instructions for execution by the processor.

The apparatus 100 may be embodied by a computing device, such as a computer terminal. However, in some embodiments, the apparatus may be embodied as a chip or chip set. In other words, the apparatus may comprise one or more physical packages (e.g., chips) including materials, components, and/or wires on a structural assembly (e.g., a baseboard). The structural assembly may provide physical strength, conservation of size, and/or limitation of electrical interaction for component circuitry included thereon. The apparatus may therefore, in some cases, be configured to implement an embodiment of the present invention on a single chip or as a single "system on a chip." As such, in some cases, a chip or chipset may constitute means for performing one or more operations for providing the functionalities described herein.

The processor 104 may be embodied in a number of different ways. For example, the processor may be embodied as one or more of various hardware processing means such as a co-processor, a microprocessor, a controller, a digital signal processor (DSP), a processing element with or without an accompanying DSP, or various other processing circuitry including integrated circuits such as, for example, an ASIC (application specific integrated circuit), an FPGA((field programmable gate array), a microcontroller unit (MCU), a hardware accelerator, a special-purpose computer chip, or the like. As such, in some embodiments, the processor may include one or more processing cores configured to perform independently. A multi-core processor may enable multiprocessing within a single physical package. Additionally or alternatively, the processor may include one or more processors configured in tandem via the bus to enable independent execution of instructions, pipelining, and/or multithreading.

In an example embodiment, the processor 104 may be configured to execute instructions stored in the memory device 108 or otherwise accessible to the processor. Alternatively or additionally, the processor may be configured to execute hard-coded functionality. As such, whether configured by hardware or software methods, or by a combination thereof, the processor may represent an entity (e.g., physically embodied in circuitry) capable of performing operations according to an embodiment of the present invention while configured accordingly. Thus, for example, when the processor is embodied as an ASIC, FPGA, or the like, the processor may be specifically configured hardware for conducting the operations described herein. Alternatively, as another example, when the processor is embodied as an executor of software instructions, the instructions may specifically configure the processor to perform the algorithms and/or operations described herein when the instructions are executed. However, in some cases, the processor may be a processor of a specific device (e.g., a pass-through display or a mobile terminal) configured to employ an embodiment of the present invention by further configuration of the processor by instructions for performing the algorithms and/or operations described herein. The processor may include, among other things, a clock, an arithmetic logic unit (ALU), and logic gates configured to support operation of the processor.

Meanwhile, the communication interface 106 may be any means such as a device or circuitry embodied in either hardware or a combination of hardware and software that is configured to receive and/or transmit data from/to a network and/or any other device or module in communication with the apparatus 100. In this regard, the communication interface may include, for example, an antenna (or multiple antennas) and supporting hardware and/or software for enabling communications with a wireless communication network. Additionally or alternatively, the communication interface may include the circuitry for interacting with the antenna(s) to cause transmission of signals via the antenna(s) or to handle receipt of signals received via the antenna(s). In some environments, the communication interface may additionally or alternatively support wired communication. As such, for example, the communication interface may include a communication modem and/or other hardware/software for supporting communication via cable, digital subscriber line (DSL), universal serial bus (USB), or other mechanisms.

In some embodiments, the apparatus 100 may include a user interface 102 that may, in turn, be in communication with processor 104 to provide output to the user and, in some embodiments, to receive an indication of a user input. As such, the user interface may include a display and, in some embodiments, may also include a keyboard, a mouse, a joystick, a touch screen, touch areas, soft keys, a microphone, a speaker, or other input/output mechanisms. Alternatively or additionally, the processor may comprise user interface circuitry configured to control at least some functions of one or more user interface elements such as a display and, in some embodiments, a speaker, ringer, microphone, and/or the like. The processor and/or user interface circuitry comprising the processor may be configured to control one or more functions of one or more user interface elements through computer program instructions (e.g., software and/or firmware) stored on a memory accessible to the processor (e.g., memory device 14, and/or the like).

As shown in Figure 1, the apparatus 100 may also include an image capturing module 110, such as a camera, video and/or audio module, in communication with the processor 104. The image capturing element may be any means for capturing an image, video and/or audio for storage, display or transmission. As used herein, an image includes a still image as well as an image from a video recording. For example, in an example embodiment in which the image capturing element is a camera, the camera may include a digital camera capable of forming a digital image file from a captured image. As such, the camera may include all hardware (for example, a lens or other optical component(s), image sensor, image signal processor, and/or the like) and software necessary for creating a digital image file from a captured image. Alternatively, the camera may include only the hardware needed to view an image, while the memory 108 of the apparatus stores instructions for execution by the processor in the form of software necessary to create a digital image file from a captured image. In an example embodiment, the camera may further include a processing element such as a co-processor which assists the processor in processing image data and an encoder and/or decoder for compressing and/or decompressing image data. The encoder and/or decoder may encode and/or decode according to, for example, a joint photographic experts group (JPEG) standard, a moving picture experts group (MPEG) standard, or other format.

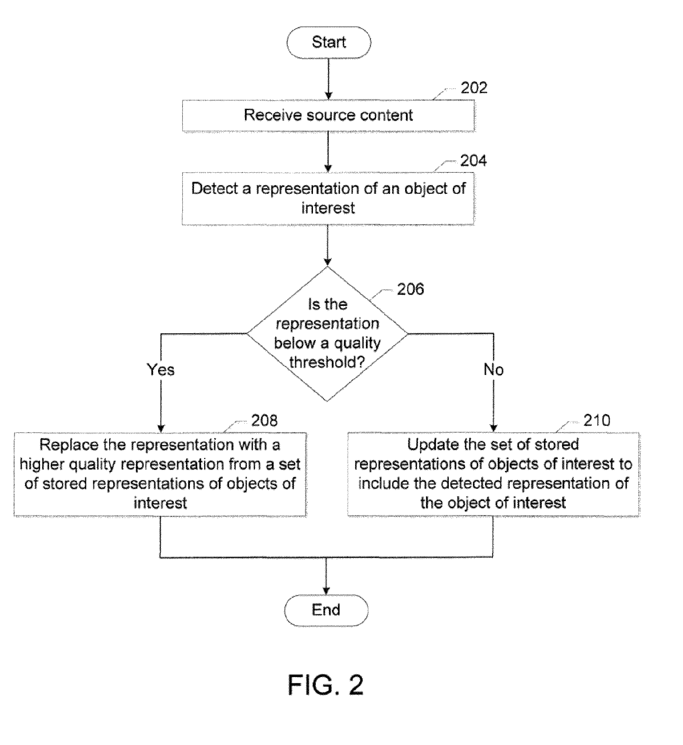

Figure 2 illustrates a flowchart containing a series of operations performed to manage an object of interest (OOI). In this regard, OOIs may include advertisements, signs, structures, and other objects that a user may see. However, OOIs are not limited to visual objects but can also be audio, sensor based or derived objects. An example of a non-visual object could be a product-specific tune. An example of a derived object could be the color of the clothing worn by the people in a scene (e.g., a red dress in a Coca Cola advertisement). The operations illustrated in Figure 2 may, for example, be performed by, with the assistance of, and/or under the control of one or more of processor 104, memory 108, user interface 102, or communications interface 106.

In operation 202, apparatus 100 includes means, such as user interface 102, processor 104, communications interface 106, memory 108, image capturing module 110, or the like, for receiving source content, wherein the source content includes at least one of audio, video, or image content. The source content may be initially captured by the apparatus 100, or may be initially captured by a separate content capturing device, such as another apparatus having an image capturing module 110, or the like.

In some embodiments, the source content may include sensor information about the source content. In this regard, the content capturing device that captures the source content may include one or more sensors that capture such sensor information at the same time that the content capturing device captures the content. Such sensors may include (but are not limited to) a compass, accelerometer, gyroscope, global positioning system device, temperature sensor, color sensor, altitude sensor, or any other sensor that may be available in conjunction with a content capturing device. In such embodiments, apparatus 100 may include means, such as processor 104 or the like, for geo-registering the source content using contextual data embedded in the source content, wherein geo-registering the content comprises associating the content with a specific location and orientation angle in conjunction with a street view or city scene type of a location-based service. In particular, using the associated sensor data (consisting of the capturing orientation in one or more of three dimensional space, location, altitude, etc.), the source content can be efficiently and robustly registered in a location and possibly time stamped. The use of the geo-registration will be described below in connection with operation 210.

After receiving the source content, in operation 204 the apparatus 100 further includes means, such as processor 104 or the like, for detecting a representation of an OOI in the source content. In one embodiment, detecting a representation of an OOI may include segmenting the source content to identify distinct representations of objects, and comparing each distinct representation of an object to representations of OOIs in a set of stored representations of OOIs.

The set of stored representations of OOIs may be gathered from an event organizer preference database. This database may include OOIs, such as sponsor advertisements or the like, that are of high importance to the event organizer. Additionally or alternatively, the set of stored representations of OOIs may be gathered from an advertisement database generated by the service creating the crowd sourced content remix or may be generated and hosted by another service provider which may, for example, have a business arrangement with the service creating the crowd sourced content remix. In this manner, a service creating content remixes may provide additional benefits to favored advertisers, such as by preventing their advertisements from being skipped or reducing the likelihood that their advertisements are skipped in the remix as poor quality source content. Additionally or alternatively, the set of stored representations of OOIs may be gathered using a user's own personal OOI preference list. In this case, the service may, for example, obtain the list of products and/or brands which are relevant for the user, such as those which the user owns or is otherwise interested in. Furthermore, the service may then obtain graphical, audible, or otherwise perceivable content associated with these relevant products or brands. In some embodiments, the content is retrieved from the company pages associated with the products or brands, or other services providing commercial marketing content.

Using the set of stored representations of OOIs, the apparatus 100 may detect representations of OOIs, for image and/or video source content. For instance, with image and/or video OOIs, the analysis may comprise visual object detection and segmentation, and may further comprise a comparison of the segmented objects to the reference OOIs. There may be one or more reference OOIs for each OOI stored in the database. In one embodiment, there may be several versions of the reference objects to represent the object in different conditions and/or different partial views of the object. This may increase the robustness of visual matching. The reference objects may be stored as feature files representing certain visual features which enable robust matching and recognition of visual objects. Correspondingly, for audio OOIs, there may be one or more reference audio objects. The reference audio files may be represented with feature vectors or feature vector sequences which allow robust matching. In one embodiment, the reference audio objects are represented with audio fingerprint features allowing robust matching, like is done in Shazam^{®}-type music identification services. This allows the system to match even partial renderings of audio advertisements, for example, against reference advertisements.

Having detected a representation of an OOI in the source content, in operation 206, the apparatus 100 may include means, such as processor 104 or the like, for determining whether the detected representation of the OOI is below a predetermined quality threshold. In this regard, the apparatus 100 may analyze the similarity between the detected representation of the OOI and relevant stored representations of the OOI. As noted previously, the detected representation of the OOI may be initially identified by comparing portions of the source content to reference representations of the OOI. Accordingly, the relevant reference representations of the OOI can be used as a benchmark for the predetermined quality threshold.

For instance, the apparatus 100, such as the processor 104, may analyze the completeness of the detected representation of the OOI. When a detected representation of the OOI is not completely visible or is otherwise not perceivable in its entirety when compared to relevant reference representations of the OOI, then the apparatus 100 may determine that the detected representation of the OOI is below the quality threshold.

Additionally or alternatively, the apparatus 100, such as the processor 104, may analyze the clarity of the detected representation of the OOI. Clarity may be evaluated by comparing the contrast, brightness, color, and/or sharpness (and/or any other similar visual metric) of the detected representation of the OOI to similar features of the reference representations of OOIs. In this regard, no reference OOI may be required, and objective criteria of clarity may be employed by the apparatus 100, such as the processor 104, to determine an appropriate quality threshold.

As another example, the apparatus 100, such as the processor 104, may analyze the size of the detected representation of the OOI. In this regard, the quality threshold is based on whether the size of the detected representation of the OOI is larger than a predetermined size threshold (chosen, for example, to ensure readability). When the OOI comprises an audio OOI, the apparatus 100, such as the processor 104, may analyze an audio OOI with regard to its objective quality. The quality aspects which may be analyzed may include but are not limited to spectral shape, that is, the relative strength of different frequencies, the presence and amount of distortion or clipping, balance between audio channels, amount of dynamic range compression, and the presence of noises such as scratch noises created during audio capture. The analysis of an audio OOI may be performed either by analyzing the quality aspects without using a reference OOI, or by means of comparing the captured audio OOI to one or more good quality reference OOIs to determine whether the captured audio OOI has a quality which is close enough to a good quality OOI.

In operation 208 the apparatus 100 may include means, such as processor 104 or the like, for, in an instance in which the apparatus 100 determines that the representation of the OOI is below a predetermined quality threshold, replacing the detected representation of the object of interest in the source content with a higher quality representation of the object of interest acquired from the set of stored representations of OOIs. In other words, operations 204 and 206 reveal any bad or partial OOI information, which is then used to embed a full representation of the OOI in the remix, thus ensuring that high quality OOIs (such as advertisements) are visible (visual OOI), audible (audio OOI), or otherwise perceivable (other sensory OOI) in the remix. If a high quality representation of the OOI is not available, the apparatus 100 may obtain a semantically linked representation of the one or more OOI which is of good aesthetic quality (e.g., good visual quality, high quality sound, etc.). For example, replacing the detected representation with a higher quality representation may mean overlaying a representation containing a partial ad with a full rendering of the ad graphics, or substituting or mixing a portion of an audio track with a high quality version of a sound advertisement.

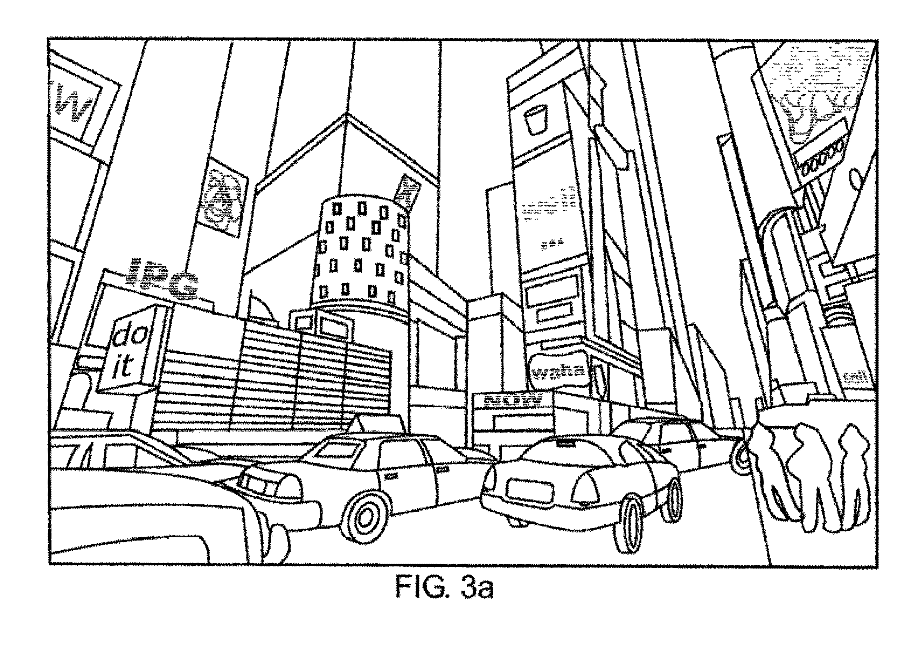

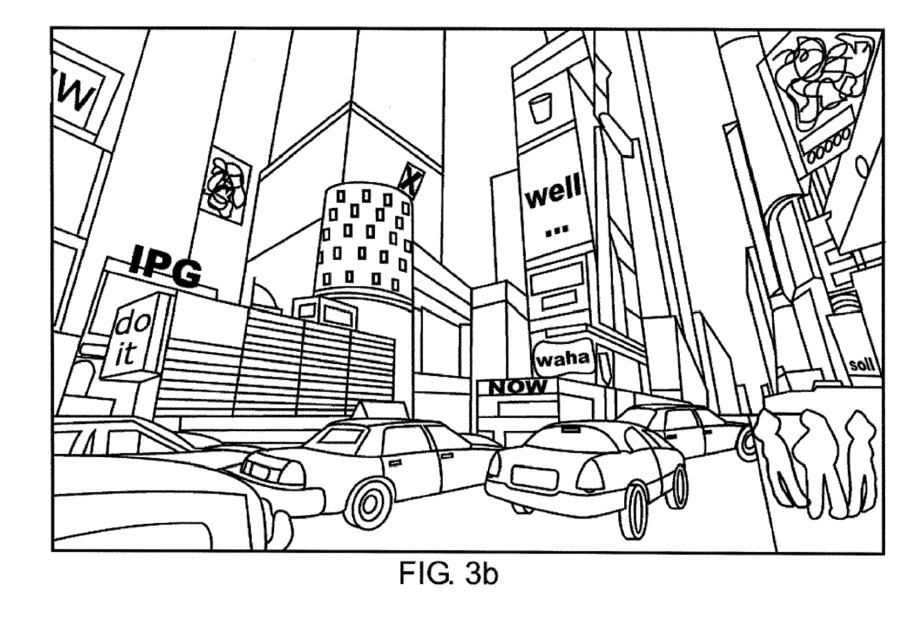

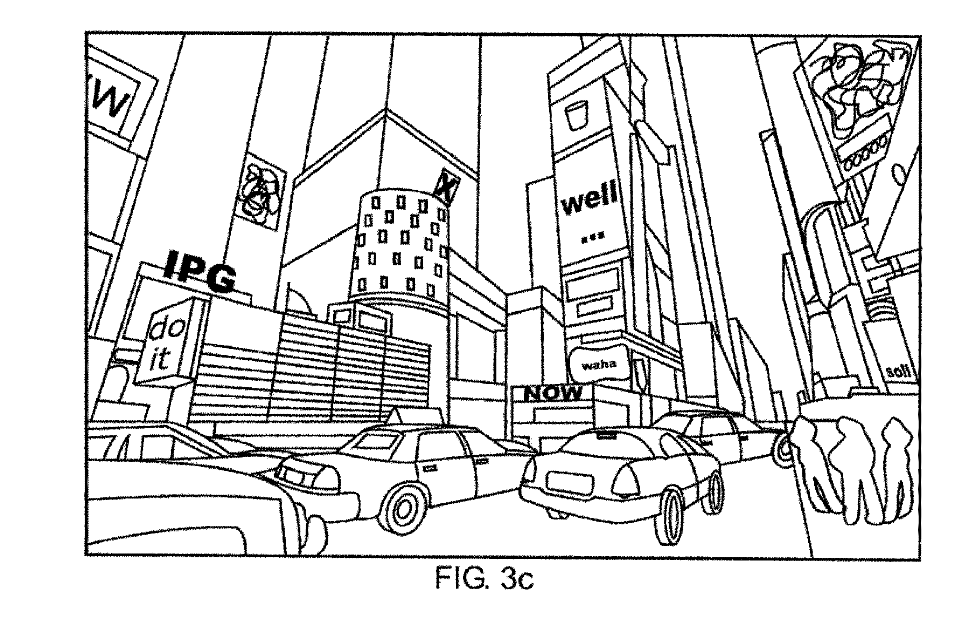

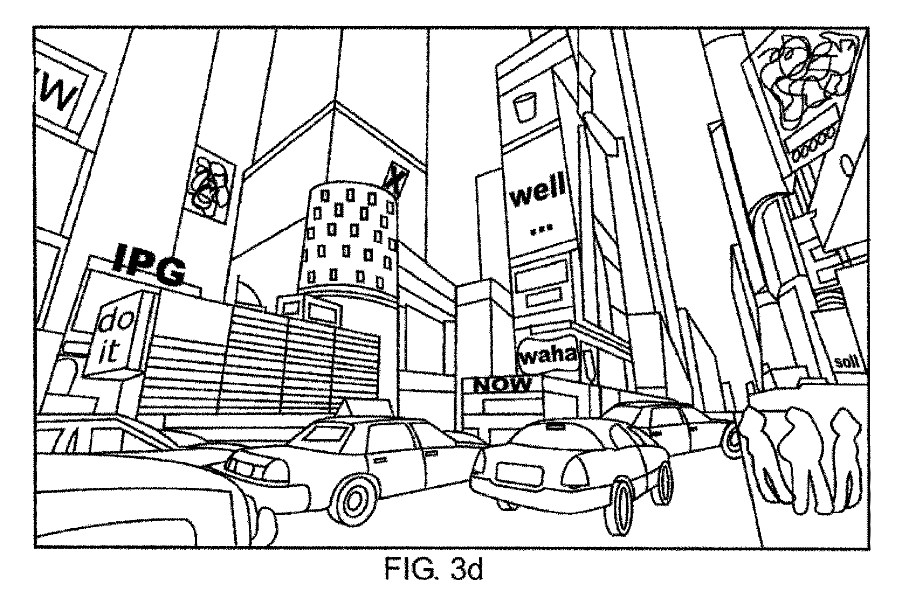

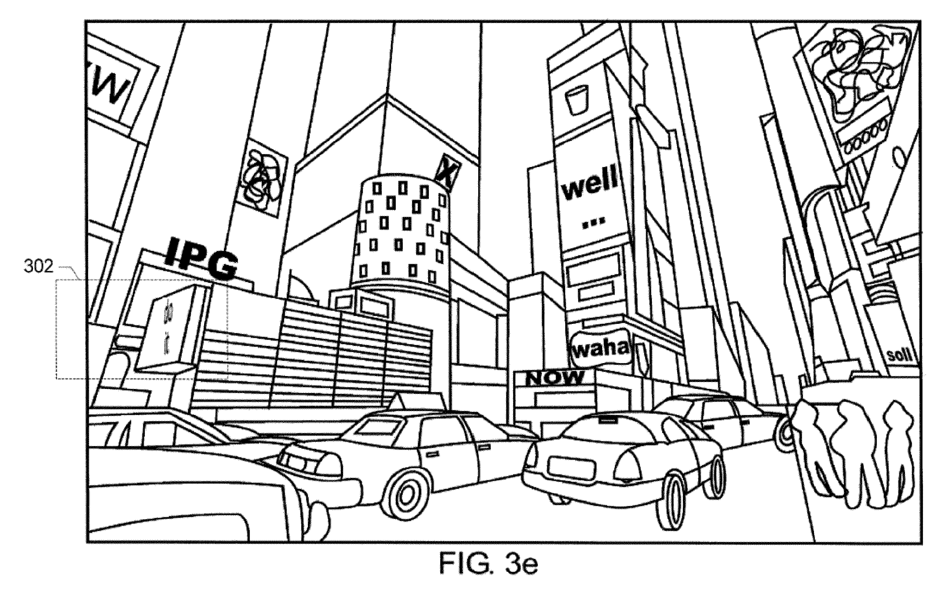

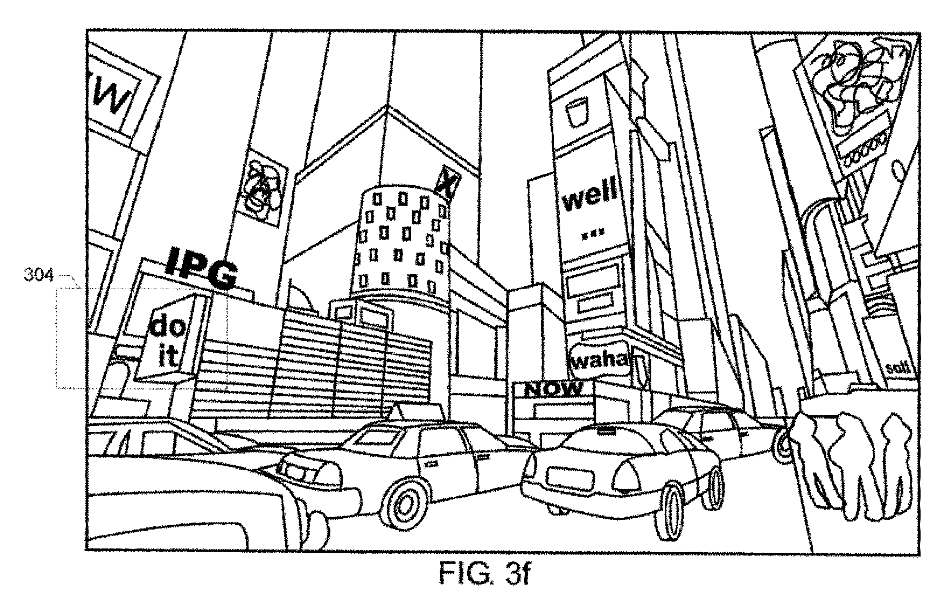

Consider the image content shown in Figures 3a to 3f, which represent example images in augmented reality (AR) applications. Figure 3a represents an example image in which all of the visible OOIs lack clarity. Assuming that these product vendors have already registered their products into the AR system, then the respective OOIs which appear with insufficient clarity and quality may be enhanced to more prominence. Accordingly, in Figure 3b the unclear advertisement signs are replaced with clear and full representations of the respective advertisement signs. As another example, consider the image content shown in Figures 3c and 3d. In Figure 3c, the OOI "waha" appears too small due to its distance from the viewing perspective. Accordingly, as shown in Figure 3d, the OOI "waha" is enlarged to increase its prominence. As yet another example, consider the image content shown in Figures 3e and 3f. In Figure 3e, element 302 illustrates the OOI "do it," which is not clearly visible due to its orientation away from the viewing perspective. In Figure 3f, element 304 shows that the OOI "do it" has been replaced with a semantically representative symbol that clearly displays the advertising content.

Returning to Figure 2, in operation 210 the apparatus 100 may include means, such as processor 104 or the like, for, in an instance in which the apparatus 100 determines that the representation of the OOI is not below a predetermined quality threshold, updating the set of stored representations of OOIs to include the detected representation of the OOI, wherein the detected representation of the object of interest replaces a stored representation in an instance in which the detected representation of the object of interest is an updated version of the stored representation. In this regard, the source content may be used to augment or correct the previous one or more OOIs in the location based on the above-described geo-registration of the source content. When the source content meets the quality threshold, it is analyzed together with the street view level content (consisting of panorama or any other suitably formatted content) to determine whether the detected representation of the OOI may be used to augment or correct the previous one or more OOIs in the location. If possible, the detected representation of the OOI from the source content is embossed on the street view content to keep the street view content updated with the latest changes to the one or more OOIs. Accordingly, the set of stored representations of OOIs will always include the latest known version of objects of interest. As an example, according to this embodiment of the invention, the advertisements in a street panorama, for example, can be kept up to date. If an advertisement is updated in the real world, and a user captures a photograph of the advertisement, the new advertisement may be recognized, and substituted for the corresponding portions of existing street panorama. Correspondingly, if a new advertisement is added to a building, the added advertisement may be recognized and added to the corresponding location in the street panorama. As another example, if an advertisement on the side of a building is replaced with another advertisement, the corresponding advertisement in the street panorama is also changed.

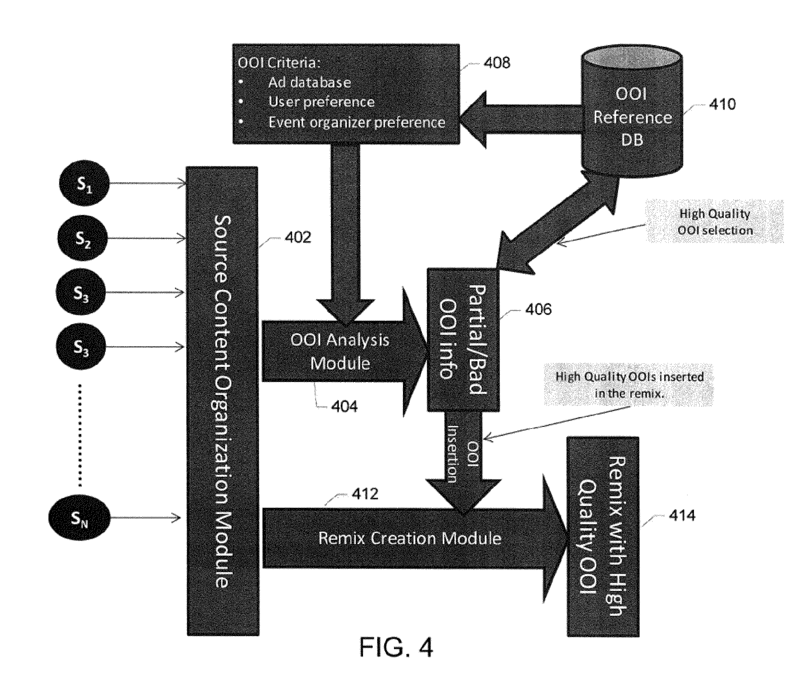

Figure 4 illustrates a diagram showing a further example of an apparatus 100 for ensuring the high quality of visibility of objects of interest in remixes, in accordance with some example embodiments. The apparatus 100 may include Source Content Organization Module 402, comprising processor 104 or the like, which ingests source content S₁ through S_{N} from a plurality of users capturing content at an event. In this regard, an event should be understood broadly, and may include a certain geographical area and a certain time span, or may be just a geographical area. Accordingly, in broad terms, content related to an event is related geospatially and/or in time. For example, content related to a street or a building captured over a long period of time might comprise event content, but the set of video footage and images from a sports event can also be described as event content.

The apparatus 100 further includes OOI Analysis Module 304, comprising processor 104 or the like, which identifies representations of OOIs in the source content and determines whether the representations exceed a predetermined quality threshold (see, e.g., operations 204 and 206 of Figure 2, described previously). This analysis may include comparing detected representations of OOIs to representations stored in an OOI database 410, comprising memory 106, an external hard drive, or the like, based on OOI criteria 408. The OOI Analysis thereafter identifies Partial/Bad OOI info 406.

The apparatus 100 further includes Remix Creation Module 412, comprising processor 104 or the like, which creates a remix based on the source content organized by module 402. Using the Partial/Bad OOI info 306 associated with the source content used in the remix, the apparatus 100 may insert high quality representations of OOIs into the remix in place of the lower quality representations originally included. Accordingly, the apparatus 100 is able to generate a remix with high quality OOIs 414.

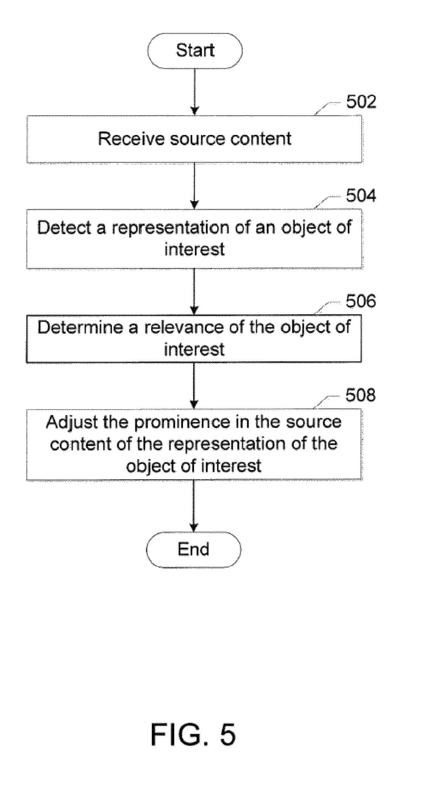

Turning now to Figure 5, a flowchart is shown that describes example operations for adjusting the prominence of a representation of an object of interest, in accordance with some example embodiments. In operation 502, the apparatus 100 may include means, such as the processor 104 or the like, for receiving source content, wherein the source content includes at least one of audio, video, or image content. This operation is similar to operation 202 of Figure 2, described previously. In operation 504, the apparatus 100 may further include means, such as processor 104, memory 108, or the like, for detecting a representation of an OOI in the source content. This operation is similar to operation 204 of Figure 2, described previously.

In operation 506, the apparatus 100 may further include means, such as processor 104, memory 108, or the like, for determining a relevance of the OOI. The relevance of the OOI may be a reflection of the importance of the OOI. In one embodiment, different OOIs may be given differentiated importance based on the type or category of the OOI. In another embodiment, the importance of the OOI may be based on the time of day. For example, late at night, certain types of OOIs may be given more importance whereas other types of OOIs are given lesser importance. In another embodiment, the different OOIs may be given different importance if the respective operating hours of a related business are known. For instance, OOIs regarding business establishments that are closed have lesser importance than OOIs regarding business establishments that are open.

In operation 508, the apparatus 100 may further include means, such as processor 104, memory 108, or the like, for adjusting prominence in the source content of the higher quality representation of the OOI. The prominence may be adjusted based on the determined relevance of the object of interest. For instance, the apparatus 100 provides greater prominence to more important OOIs, as determined above. Moreover, in some embodiments, the prominence of the higher quality representation of the OOI may be adjusted without first determining the relevance of the object of interest, such as, for example, by changing the prominence in response to user preference. For instance, if a personal OOI preference list is used, the prominence may be based on the personal OOI preference list and not based on a relevance determination, to ensure that certain user-preferred OOIs will be shown at higher prominence than others (even at the cost of capturing additional real estate in the view frame).

As described above, certain example embodiments of the present invention may enable better management of OOIs and provide additional ways to generate benefits to favored advertisers. For instance, ad agencies would be assured of inclusion of their ads in a remix even if the source content that recorded them is below the quality desired for inclusion in a remix. In addition, partially visible ads can be ensured to be fully visible with full quality, thus providing a greater return on investment for advertisers. Accordingly, a greater amount may be charged to advertisers for the technology and service to ensure that their ads are nicely visible whenever they are included in compilations made from user provided content. In the case of AR applications, the advertisement content can be differentially highlighted in a proper manner. Moreover, with some embodiments described herein, different types of OOIs can be rendered with different preferences and/or priority, based on the personal or service based needs of the user. Finally, crowd-sourced content can be used to update the set of reference OOIs with the latest real-world updates, to maintain better concurrency of the periodically captured views in location based services.

As described above, Figures 2 and 5 illustrate flowcharts of the operation of an apparatus, method, and computer program product according to example embodiments of the invention. It will be understood that each block of the flowcharts, and combinations of blocks in the flowcharts, may be implemented by various means, such as hardware, firmware, processor, circuitry, and/or other devices associated with execution of software including one or more computer program instructions. For example, one or more of the procedures described above may be embodied by computer program instructions. In this regard, the computer program instructions which embody the procedures described above may be stored by a memory 108 of an apparatus employing an embodiment of the present invention and executed by a processor 104 of the apparatus. As will be appreciated, any such computer program instructions may be loaded onto a computer or other programmable apparatus (e.g., hardware) to produce a machine, such that the resulting computer or other programmable apparatus implements the functions specified in the flowchart blocks. These computer program instructions may also be stored in a computer-readable memory that may direct a computer or other programmable apparatus to function in a particular manner, such that the instructions stored in the computer-readable memory produce an article of manufacture, the execution of which implements the functions specified in the flowchart blocks. The computer program instructions may also be loaded onto a computer or other programmable apparatus to cause a series of operations to be performed on the computer or other programmable apparatus to produce a computer-implemented process such that the instructions executed on the computer or other programmable apparatus provide operations for implementing the functions specified in the flowchart blocks.

Accordingly, blocks of the flowcharts support combinations of means for performing the specified functions and combinations of operations for performing the specified functions. It will also be understood that one or more blocks of the flowcharts, and combinations of blocks in the flowcharts, can be implemented by special purpose hardware-based computer systems which preform the specified functions, or combinations of special purpose hardware and computer instructions.

In some embodiments, certain ones of the operations above may be modified or further amplified. Furthermore, in some embodiments, additional optional operations may be included. Modifications, amplifications, or additions to the operations above may be performed in any order and in any combination.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A method comprising:
receiving source content, wherein the source content includes at least one of audio, video, or image content;
detecting a representation of an object of interest in the source content;
determining, by a processor, whether the detected representation of the object of interest is below a predetermined quality threshold; and
in an instance in which the representation of the object of interest is below the predetermined quality threshold, replacing the detected representation of the object of interest in the source content with a higher quality representation of the object of interest acquired from a set of stored representations of objects of interest.

2. The method of Claim 1, wherein detecting the representation of the object of interest in the source content includes:
segmenting the source content to identify distinct representations of objects; and
comparing each distinct representation of an object to representations of objects of interest in the set of stored representations of objects of interest.

3. The method of Claim 2, wherein determining whether the detected representation of the object of interest is below the predetermined quality threshold includes at least one of:
analyzing the similarity between the detected representation of the object of interest and a stored representation of the object of interest;
analyzing clarity of the detected representation of the object of interest; or
determining whether a size of the detected representation of the object of interest is larger than a predetermined size threshold.

4. The method of Claim 1, further comprising:
adjusting prominence in the source content of the higher quality representation of the object of interest.

5. The method of Claim 4, further comprising:
determining a relevance of the object of interest,
wherein adjusting the prominence in the source content of the higher quality representation of the object of interest is based on the determined relevance of the object of interest.

6. The method of Claim 1, further comprising:
geo-registering the source content using contextual data embedded in the source content,
wherein geo-registering the content comprises associating the content with a specific location.

7. The method of Claim 6, further comprising:
in an instance in which the detected representation of the object of interest is not below the predetermined quality threshold, updating the set of stored representations of objects of interest to include the detected representation of the object of interest,
wherein the detected representation of the object of interest replaces a stored representation in an instance in which the detected representation of the object of interest is an updated version of the stored representation.

8. An apparatus comprising:
means for receiving source content, wherein the source content includes at least one of audio, video, or image content;
means for detecting a representation of an object of interest in the source content;
means for determining whether the detected representation of the object of interest is below a predetermined quality threshold; and
in an instance in which the representation of the object of interest is below the predetermined quality threshold, means for replacing the detected representation of the object of interest in the source content with a higher quality representation of the object of interest acquired from a set of stored representations of objects of interest.

9. The apparatus of Claim 8, comprises further, means for detecting the representation of the object of interest in the source content by:
segmenting the source content to identify distinct representations of objects; and
comparing each distinct representation of an object to representations of objects of interest in the set of stored representations of objects of interest.

10. The apparatus of Claim 9, comprises further, means for determining whether the detected representation of the object of interest is below the predetermined quality threshold by at least one of:
analyzing the similarity between the detected representation of the object of interest and a stored representation of the object of interest;
analyzing clarity of the detected representation of the object of interest; or
determining whether a size of the detected representation of the object of interest is larger than a predetermined size threshold.

11. The apparatus of Claim 8, comprises further, means for causing the apparatus to adjust prominence in the source content of the higher quality representation of the object of interest.

12. The apparatus of Claim 11, comprises further:
means for determining a relevance of the object of interest,
wherein the means for causing the apparatus to adjust the prominence in the source content of the higher quality representation of the object of interest is based on the determined relevance of the object of interest.

13. The apparatus of Claim 8, comprises further :
means for geo-registering the source content using contextual data embedded in the source content,
wherein geo-registering the content comprises associating the content with a specific location.

14. The apparatus of Claim 13, comprises further, means for causing the apparatus to:
in an instance in which the detected representation of the object of interest is not below the predetermined quality threshold, update the set of stored representations of objects of interest to include the detected representation of the object of interest,
wherein the detected representation of the object of interest replaces a stored representation in an instance in which the detected representation of the object of interest is an updated version of the stored representation.

15. A computer program code configured to realize the actions of the method of any of claims 1 to 7 when executed by a processor.
